# EUROPEAN PATENT SPECIFICATION

(11) **EP 4 202 282 B1**
(45) Date of publication and mention of the grant of the patent: **04.06.2025**
(21) Application number: 21216367.9
(22) Date of filing: 21.12.2021
(51) Int. Cl.: F16N 7/40, F03D 17/00, F03D 80/70, F16N 29/02, F16C 33/10, F16C 33/66

(54) **METHOD AND DEVICE FOR DETERMINING A LUBRICATION CONDITION OF A MAIN BEARING OF A WIND TURBINE**
VERFAHREN UND VORRICHTUNG ZUR BESTIMMUNG DES SCHMIERZUSTANDS EINES HAUPTLAGERS EINER WINDTURBINE
PROCÉDÉ ET DISPOSITIF POUR DÉTERMINER UN ÉTAT DE LUBRIFICATION D'UN PALIER PRINCIPAL D'UNE ÉOLIENNE

(43) Date of publication of application: 28.06.2023
(73) Proprietor: Siemens Gamesa Renewable Energy A/S, 7330 Brande (DK); Hydac A/S, 5500 Langeskov (DK)
(72) Inventor: FRYDENDAL, Niels Karl, 7400 Herning (DK); HAUGAARD, Jens, 5300 Kerteminde (DK)
(74) Representative: SGRE-Association

(56) References cited:
- EP-A1- 3 739 208
- DE-A1- 102005 032 480
- DE-A1- 2 914 630
- US-A1- 2011 204 633

## Description

### Field of invention

The present invention relates to a device and a method of determining a lubrication condition of a main bearing of a wind turbine.

A conventional wind turbine comprises a rotor with rotor blades. The rotor is mounted rotatable to a nacelle of the wind turbine by means of a main bearing. The rotor is thus rotatable about a rotation axis. Some oil is usually leaking from the main bearing. There may be very long periods without wind flow, where the main bearing can be completely dried, but the wind turbine must still be functional even after months or years after a leakage begins to appear.

The main bearing is usually a single fluid film bearing (SFFB) which comprises a cavity which needs completely to be filled by the lubrication oil. To compensate for thermal expansion and contraction of the oil and for possible leakage from shaft seals, a small oil flow is continuously pumped from an oil tank into the main bearing. Thereby, there will be excess oil in the main bearing. DE2914630A discloses an example of a device for controlling the lubricating oil flow through a generator bearing. It is difficult to monitor the presence of such oil flow, as there is only small oil pressure by gravity. Conventional oil flow meters take a greater oil pressure than what is available here. Oil levels are usually measured with level gauges, however, since the lubrication oil in the main bearing is not a level but simply fills the cavity, a conventional level gauge can hardly be used in a top part of the main bearing.

### Summary of the Invention

It is the object of the present invention to provide a device and a method of determining a lubrication condition of a main bearing of a wind turbine. This object is achieved by the subject matters according to the independent claims. The present invention is further developed as set forth in the dependent claims.

According to a first aspect of the invention, a device for determining a lubrication condition of a main bearing of a wind turbine is provided. The device comprises a container which is configured to collect a leakage lubrication oil from the main bearing; an outlet which is configured to discharge the collected oil from the container with a predetermined flow rate; an overflow passage which is configured to discharge on overflow of the collected oil from the container; a detecting device which is configured to detect an overflow of the collected oil through the overflow passage; and a determining device which is configured to determine that the lubrication condition of a main bearing is sufficient if the detecting device detects the overflow of the collected oil through the overflow passage.

In the context of the present patent application, the "sufficient lubrication condition of a main bearing" may refer to a condition where the cavity of the main bearing is substantially completely filled by the lubrication oil.

The present invention uses a kind of difference measurement, i.e., if a total leakage lubrication oil flow amount is higher than the flow amount through the outlet, the excessive leakage lubrication oil escapes through the overflow passage. Such flow amount is then detected by the detecting device which eventually results in the determination that the lubrication condition of a main bearing is sufficient.

According to an embodiment, the overflow passage is connected to the container at a location which is higher than a location of the outlet. It is ensured that the flow through the overflow passage starts after a flow through the outlet.

According to an embodiment, the detecting device comprises a level detecting device which is configured to detect a predetermined oil level in the container. Preferably, the predetermined oil level is arranged substantially at the same level where the overflow passage is connected to the container. If the level detecting device detects the predetermined oil level in the container, the overflow of the collected oil through the overflow passage is detected.

According to an embodiment, the predetermined flow rate of the outlet is adjustable or controllable. If the outlet is fully closed, the oil flow therethrough can be even zero.

According to the invention, the device for determining a lubrication condition further comprises an oil tank which is configured to receive the discharged oil from the outlet and the discharged oil from the overflow passage. According to an embodiment, the device for determining a lubrication condition further comprises a feedback passage which is configured to feed back the oil from the oil tank to the main bearing.

According to the invention, the device for determining a lubrication condition further comprises at least one funnel which is configured to collect the leakage lubrication oil from the main bearing and to lead the leakage oil to the container. According to an embodiment, the leakage oil is collected by means of gravitation.

According to an embodiment, the leakage lubrication oil is collected by means of gravitation.

The present invention monitors that there is a leakage oil flow in overflow passage, which indicates that the lubrication condition is sufficient. The leakage oil flows by gravity alone, and the overflow is led to the container with the outlet at the bottom which allows a limited oil flow. Close to the top of the container, there is the overflow passage where oil will flow out if more oil flows into to the container than out of the container through the outlet. The detecting device detects the oil flow in the overflow passage. If there is a flow in the overflow passage, then it is determined there is a sufficient lubrication condition of the bearing because it can be ascertained that the cavity in the main bearing is sufficiently filled by the lubrication oil. Instead of a conventional level measurement, the present invention uses an overflow detection which can be monitored in a simple and reliable manner with only one sensor. A sophisticated sensor in the cavity of the main bearing is not required. Since the oil flows by gravity alone, no additional pressure source is necessary.

It has to be noted that embodiments of the invention have been described with reference to different subject matters.

In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof; and
- Fig. 2: shows a block diagram of a device for determining a lubrication condition of a main bearing of a wind turbine according to an embodiment.

### Detailed Description

The illustrations in the drawings are schematically. It is noted that in different figures, similar or identical elements are provided with the same reference signs.

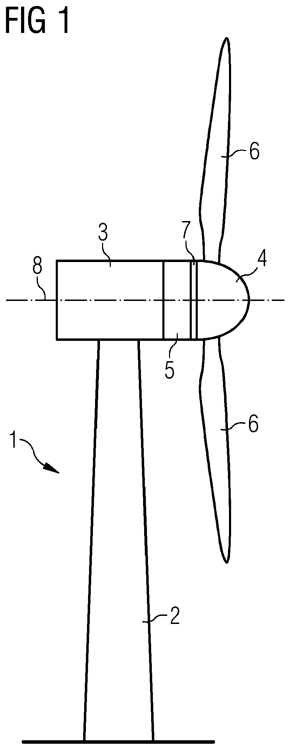

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gear-less, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

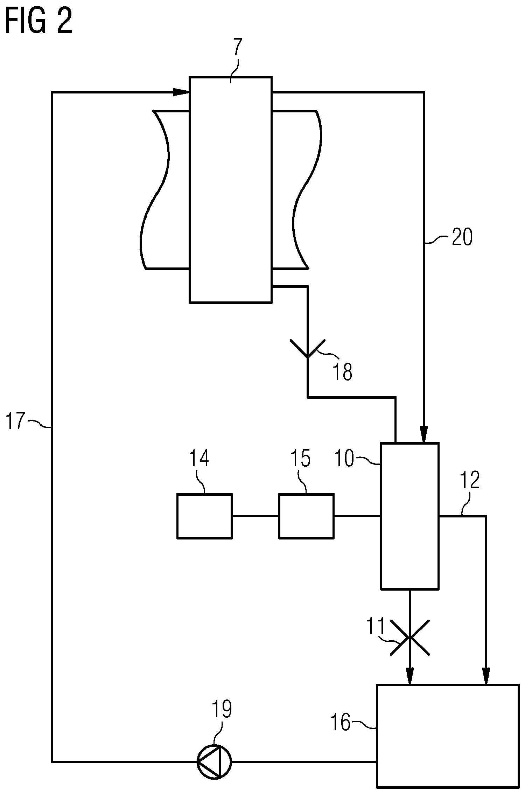

**Fig. 2** shows a block diagram of a device for determining a lubrication condition of the main bearing 7 of the wind turbine 1 according to an embodiment. The device for determining a lubrication condition of the main bearing 7 of the wind turbine 1 comprises a container 10 which is configured to collect a leakage lubrication oil from the main bearing 7. The leakage lubrication oil can be supplied to the container 10 via an inlet pipe 20. A a funnel 18 is provided which collects the leakage lubrication oil and supplies the same to the container 10. Preferably, the leakage oil is collected by means of gravitation so that no pressurizing or feeding means is necessary.

The device for determining a lubrication condition further comprises an outlet 11, such as a small hole/orifice, at the bottom of the container 10, wherein the outlet 11 is configured to discharge the collected oil from the container 10 with a predetermined flow rate. Preferably, the predetermined flow rate of the outlet 11 is adjustable or controllable. If the outlet 11 is closed, the predetermined flow rate is zero.

The device for determining a lubrication condition further comprises an overflow passage 12 which is configured to discharge on overflow of the collected oil from the container 1. Preferably, the overflow passage 12 is connected to the container 10 at a location which is higher than a location of the outlet 11. The device for determining a lubrication condition further comprises a detecting device 15 which is configured to detect an overflow of the collected oil from the container 10 through the overflow passage 12.

The device for determining a lubrication condition further comprises a determining device 14 which is configured to determine that the lubrication condition of a main bearing 7 is sufficient if the detecting device 15 detects the overflow of the collected oil through the overflow passage 12. For example, the determining device 14 receives a signal from the detecting device 15 which indicates that there is an oil flow in the overflow passage 12. The determining device 14, which can comprise a processor and the like, then determines that the lubrication condition of the main bearing 7 is sufficient.

The detecting device 15 can comprise a level detecting device which is configured to detect a predetermined oil level in the container 10. The predetermined oil level is arranged substantially at the same level where the overflow passage 12 is connected to the container 10. If the level detecting device 15 detects the predetermined oil level in the container 10, the overflow of the collected oil through the overflow passage 12 occurs and is detected thereby.

When the overflow from the main bearing 7 is higher than the limited amount drained from the bottom outlet 11 of the container 10, the container 10 will be filled up and the detecting device 15 in the shape of the level detecting device located at the predetermined level in the container 10 will detect that there is oil at this predetermined level in the container 10. In short, it can be said that as long as the level detecting device detects that there is the predetermined oil level in the container 10, then the amount of overflow of excess oil from the main bearing 7 is higher than the limited amount that is drained out of the outlet 11 of the container 10.

The present invention uses a kind of difference measurement, i.e., if a total leakage lubrication oil flow amount is higher than the flow amount through the outlet 11, the excessive leakage lubrication oil escapes through the overflow passage 12. Such flow amount is then detected by the detecting device 15 which eventually results in the determination by the determining device 14 that the lubrication condition of the main bearing 7 is sufficient.

The device for determining a lubrication condition further comprises an oil tank 16 which is configured to receive the discharged oil from the outlet 11 and the discharged oil from the overflow passage 12, and a feedback passage 17 which is configured to feed back the oil from the oil tank 16 to the main bearing 7 so that an oil circulation passage is realized. The feedback passage 17 preferably comprises a pump 19.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 1: wind turbine
- 2: tower
- 3: nacelle
- 4: hub
- 5: generator
- 6: blade
- 7: main bearing
- 8: rotational axis
- 10: container
- 11: outlet
- 12: overflow passage
- 14: determining device
- 15: detecting device
- 16: oil tank
- 17: feedback passage
- 18: funnel
- 19: pump
- 20: pipe

## Claims

1. A wind turbine (1) comprising a device for determining a lubrication condition of a main bearing (7) of the wind turbine (1), the device comprising:
a container (10) which is configured to collect a leakage lubrication oil from the main bearing (7);
an outlet (11) which is configured to discharge the collected oil from the container (10) with a predetermined flow rate;
an overflow passage (12) which is configured to discharge on overflow of the collected oil from the container (10);
a detecting device (15) which detects an overflow of the collected oil through the overflow passage (12);
a determining device (14) which determines that the lubrication condition of a main bearing (7) is sufficient if the detecting device (15) detects the overflow of the collected oil through the overflow passage (12); and
at least one funnel (18) which is configured to collect the leakage lubrication oil from the main bearing (7) and to lead the leakage oil to the container (10).

2. The wind turbine (1) according to the preceding claim, wherein
the overflow passage (12) is connected to the container (10) at a location which is higher than a location of the outlet (11).

3. The wind turbine (1) according to any one of the preceding claims, wherein
the detecting device (15) comprises a level detecting device which is configured to detect a predetermined oil level in the container (10).

4. The wind turbine (1) according to any one of the preceding claims, wherein
the predetermined flow rate of the outlet (11) is adjustable or controllable.

5. The wind turbine (1) according to any one of the preceding claims, further comprising:
an oil tank (16) which is configured to receive the discharged oil from the outlet (11) and the discharged oil from the overflow passage (12).

6. The wind turbine (1) according to the preceding claim, further comprising:
a feedback passage (17) which is configured to feed back the oil from the oil tank (16) to the main bearing (7).

7. The wind turbine (1) according to any one of the preceding claims, wherein
the leakage oil is collected by means of gravitation.

## Patentansprüche

1. Windenergieanlage (1), umfassend eine Vorrichtung zum Bestimmen eines Schmierzustands eines Hauptlagers (7) der Windenergieanlage (1), wobei die Vorrichtung Folgendes umfasst:
einen Behälter (10), der dazu ausgelegt ist, ein Leckschmieröl aus dem Hauptlager (7) aufzufangen;
einen Auslass (11), der dazu ausgelegt ist, das aufgefangene Öl mit einer vorbestimmten Durchflussrate aus dem Behälter (10) abzuführen;
einen Überlaufkanal (12), der dazu ausgelegt ist, bei einem Überlauf des aufgefangenen Öls aus dem Behälter (10) abzuführen;
eine Erfassungsvorrichtung (15), die einen Überlauf des aufgefangenen Öls durch den Überlaufkanal (12) erfasst;
eine Bestimmungsvorrichtung (14), die bestimmt, dass der Schmierzustand eines Hauptlagers (7) ausreicht, wenn die Erfassungsvorrichtung (15) den Überlauf des aufgefangenen Öls durch den Überlaufkanal (12) erfasst; und
mindestens einen Trichter (18), der dazu ausgelegt ist, das Leckschmieröl aus dem Hauptlager (7) aufzufangen und das Lecköl zu dem Behälter (10) zu leiten.

2. Windenergieanlage (1) nach dem vorhergehenden Anspruch, wobei
der Überlaufkanal (12) an einer Stelle mit dem Behälter (10) verbunden ist, die höher als eine Stelle des Auslasses (11) ist.

3. Windenergieanlage (1) nach einem der vorhergehenden Ansprüche, wobei
die Erfassungsvorrichtung (15) eine Füllstandserfassungsvorrichtung umfasst, die dazu ausgelegt ist, einen vorbestimmten Ölstand in dem Behälter (10) zu erfassen.

4. Windenergieanlage (1) nach einem der vorhergehenden Ansprüche, wobei
die vorgegebene Durchflussrate des Auslasses (11) einstellbar oder steuerbar ist.

5. Windenergieanlage (1) nach einem der vorhergehenden Ansprüche, ferner umfassend:
einen Öltank (16), der dazu ausgelegt ist, das aus dem Auslass (11) abgeführte Öl und das aus dem Überlaufkanal (12) abgeführte Öl aufzunehmen.

6. Windenergieanlage (1) nach dem vorhergehenden Anspruch, ferner umfassend:
einen Rückführkanal (17), der dazu ausgelegt ist, das Öl aus dem Öltank (16) zum Hauptlager (7) zurückzuführen.

7. Windenergieanlage (1) nach einem der vorhergehenden Ansprüche, wobei
das Lecköl mittels Schwerkraft aufgefangen wird.

## Revendications

1. Éolienne (1) comprenant un dispositif de détermination d'un état de lubrification d'un palier principal (7) de l'éolienne (1), le dispositif comprenant :
un conteneur (10) qui est configuré pour collecter une huile de lubrification de fuite depuis le palier principal (7) ;
un orifice de sortie (11) qui est configuré pour évacuer l'huile collectée du conteneur (10) selon un débit d'écoulement prédéterminé ;
un passage de trop-plein (12) qui est configuré pour évacuer un trop-plein de l'huile collectée du conteneur (10) ;
un dispositif de détection (15) qui détecte un trop-plein de l'huile collectée à travers le passage de trop-plein (12) ;
un dispositif de détermination (14) qui détermine que l'état de lubrification d'un palier principal (7) est suffisant si le dispositif de détection (15) détecte le trop-plein de l'huile collectée à travers le passage de trop-plein (12) ; et
au moins un entonnoir (18) qui est configuré pour collecter l'huile de lubrification de fuite provenant du palier principal (7) et pour diriger l'huile de fuite vers le conteneur (10).

2. Éolienne (1) selon la revendication précédente, dans laquelle
le passage de trop-plein (12) est raccordé au conteneur (10) à une localisation qui est supérieure à une localisation de l'orifice de sortie (11).

3. Éolienne (1) selon l'une quelconque des revendications précédentes, dans laquelle
le dispositif de détection (15) comprend un dispositif de détection de niveau qui est configuré pour détecter un niveau d'huile prédéterminé dans le conteneur (10).

4. Éolienne (1) selon l'une quelconque des revendications précédentes, dans laquelle
le débit d'écoulement prédéterminé de l'orifice de sortie (11) peut être ajusté ou régulé.

5. Éolienne (1) selon l'une quelconque des revendications précédentes, comprenant en outre :
une cuve d'huile (16) qui est configurée pour recevoir l'huile évacuée de l'orifice de sortie (11) et l'huile évacuée du passage de trop-plein (12).

6. Éolienne (1) selon la revendication précédente, comprenant en outre :
un passage de retour (17) qui est configuré pour renvoyer l'huile de la cuve d'huile (16) vers le palier principal (7).

7. Éolienne (1) selon l'une quelconque des revendications précédentes, dans laquelle
l'huile de fuite est collectée par gravitation.
